(19) Europäisches Patentamt
European Patent Office
Office européen des brevets

(11) Publication number: **0 086 555**
**A1**

(12) # EUROPEAN PATENT APPLICATION

(21) Application number: **83300176.1**

(22) Date of filing: **13.01.83**

(51) Int. Cl.[3]: **H 01 M 4/58**, C 01 C 3/12

(30) Priority: **14.01.82 JP 4663/82**

(43) Date of publication of application: **24.08.83**
**Bulletin 83/34**

(84) Designated Contracting States: **CH DE FR GB LI**

(71) Applicant: **KABUSHIKI KAISHA DAINI SEIKOSHA,**
**31-1, 6-chome Kameido, Koto-ku Tokyo (JP)**

(72) Inventor: **Itaya, Kingo, 2-3-12, 1-chome Maruyama, Tagajo-shi Miyagi-ken (JP)**
Inventor: **Shibayama, Kimio, 1-4, 2-chome Yagiyamahoncho, Sendai-shi Miyagi-ken (JP)**
Inventor: **Toshima, Shinobu, 8-8, 1-chome Yagiyamaminami, Sendai-shi Miyagi-ken (JP)**
Inventor: **Ataka, Tatsuaki, KABUSHIKI KAISHA DAINI SEIKOSHA 6-31-1, Kameido, Koto-ku Tokyo (JP)**
Inventor: **Iwasa, Koji, KABUSHIKI KAISHA DAINI SEIKOSHA 6-31-1, Kameido, Koto-ku Tokyo (JP)**

(74) Representative: **Caro, William Egerton et al, J. MILLER & CO. Lincoln House 296-302 High Holborn, London WC1V 7JH (GB)**

(54) **Electrochemical cell.**

(57) A cell comprises an anode, a cathode, and an electrolyte in contact with both the anode and the cathode. The cathode contains, as an electrochemically active material, a polynuclear transition metal cyanide complex having the general formula:

$M^A_K [M^B (CN)_6]_\ell \; xH_2O$

where
$M^A$: a metal ion having a valence of A,
$M^B$: a metal ion having a valence of B,
K: a positive number from 1 to 4
$\ell$: a positive number from 1 to 3,
x: a positive number including O,
with the proviso that A, B, K, and $\ell$ satisfy the following equation: $A \times K = (6 - B) \times \ell$

EP 0 086 555 A1

0086555



TITLE MODIFIED
see front page

"CELL"

This invention relates to cells.

In recent years, small-sized portable electronic devices using an electric power source in the form of a battery have become very advanced and are now in widespread use. Examples of such electronic devices are electronic watches, cameras, desk-top calculators, lighters, hearing aids, etc. In parallel with the development of electronic devices, development of batteries has taken place in order to reduce size and thickness thereof. The provision of electronic devices with multiple functions, however, inevitably results in an increased power consumption so that battery life is reduced. There is thus a need to provide electronic devices with a replacement-free power source comprising a secondary cell or battery and a solar battery for charging the former.

Several types of secondary cell are well-known such as cadmium-nickel cells and zinc-silver oxide cells both using aqueous electrolytes, and lithium-titanium disulphide cells using non-aqueous electrolytes. Requirements for such secondary cells are that they have an increased number of charge/discharge cycles, have relatively high charging efficiency, and relatively limited self-discharge. Particularly, the properties required for active cathodic materials of such cells are that there is little or no structural change due to the electrochemical reaction, the electrochemical oxidation-reduction reaction is reversible and low solubility in the electrolyte.

Conventional cathodic active materials for secondary cells do not fully satisfy all of the above-mentioned requirements. For example, cadmium-nickel cells have a relatively low charging efficiency since side-reactions such as the evolution of oxygen take place on the cathode during charging. Lithium-titanium disulphide cells suffer from the problem that the crystal structure degrades with repetition of the charge/discharge cycle since lithium ions intercalate between layers of titanium disulphide crystals during

discharge and this causes expansion of the titanium disulphide crystals in the direction of the c-axis.

According to the present invention there is provided a cell comprising an anode, a cathode, and an electrolyte in contact with both the anode and the cathode, characterised in that said cathode contains as an electrochemically active material a polynuclear transition metal cyanide complex having the general formula:

$$M^A_K\left[M^B(CN)_6\right]_\ell \cdot xH_2O$$

where $M^A$: a metal ion having a valence of A,

$M^B$: a metal ion having a valence of B,

K : a positive number from 1 to 4,

$\ell$ : a positive number from 1 to 3,

x : a positive number including O,

with the proviso that A, B, K, and $\ell$ satisfy the following equation:

$$A \times K = (6 - B) \times \ell$$

In one embodiment the electrochemically active material has the following formula:

$$M^A_4\left[M^B(CN)_6\right]_3 \cdot xH_2O$$

where $M^A$: Fe(III), Ru(III), Os(III), Al(III), Sb(III), Bi(III), Ce(III);

$M^B$: Fe(II), Ru(II), Os(II).

In another embodiment the elctrochemically active material has the following formula:

$$M^A_3\left[M^B(CN)_6\right]_2 \cdot xH_2O$$

where $M^A$: Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II);

$M^B$: Cr(III), Mn(III), Fe(III), Co(III), Rh(III), Ir(III)

Alternatively the electrochemically active material may have the following formula:

$$M^A_2\left[M^B(CN)_6\right] \cdot xH_2O$$

where $M^A$: Cr(II), Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II);

$M^B$: Cr(II), Mn(II), Fe(II), Ru(II), Os(II), Co(II), Rh(II), Ir(II).

In a further embodiment the electrochemically active material has the following formula:

$$M^A\left[M^B(CN)_6\right].xH_2O$$

where $M^A$: Cr(III), Fe(III), Ru(III), Os(III), Al(III), Sb(III), Bi(III), Ce(III);

$M^B$: Cr(III), Mn(III), Fe(III), Ru(III), Os(III),

The electrochemically active material may have the following formula:

$$M_3^A\left[M^B(CN)_6\right].xH_2O$$

where $M^A$: Cu(I), Ag(I), Hg(I), Tl(I);

$M^B$: Cr(III), Mn(III), Fe(III), Ru(III), Os(III), Co(III) Rh(III), Ir(III).

Alternatively, the electrochemically active material may have the following formula:

$$M_4^A\left[M^B(CN)_6\right].xH_2O$$

where $M^A$: Cu(I), Ag(I), Hg(I), Tl(I);

$M^B$: Cr(II), Mn(II), Fe(II), Ru(II), Os(II), Co(II), Rh(II), Ir(II).

In a yet further embodiment the electrochemically active material has the following formula:

$$M^A\left[M^B(CN)_6\right].xH_2O$$

where $M^A$: Sn(IV), Ce(IV);

$M^B$: Cr(II), Mn(II), Fe(II), Ru(II), Os(II), Co(II), Rh(II), Ir(II)

The invention is illustrated, merely by way of example, in the accompanying drawings, in which:-

Figure 1 shows cyclic voltammograms produced from an electrode

having a film of Prussian blue thereon and a hybrid Prussian blue electrode in an aqueous solution of 1 M KCl;

Figure 2 shows cyclic voltammograms of an electrode having a film of Prussian blue thereon in 1 M KCl, indicating that the electrode is stable over $10^4$ cycles of oxidation-reduction reaction;

Figure 3 is a diagram showing the retention of active cathodic material including Prussian blue in relation to number of oxidation-reduction cycles, indicating that some cations can move into the Prussian blue film, but some cannot;

Figure 4 illustrates the crystal structure of Prussian blue;

Figure 5 illustrates the size of a bottle-neck in the crystal structure of Prussian blue;

Figure 6 is a diagram showing the retention of active cathodic material including Prussian blue in relation to the pH of an electrolyte;

Figure 7 is a cross-section of one embodiment of a cell according to the present invention;

Figure 8 shows the charge/discharge characteristic of the cell shown in Figure 7;

Figure 9 is a cross-section of another embodiment of a cell according to the present invention;

Figure 10 is a cyclic voltammogram of Ruthenium purple, $FE(III)_4[Ru(II)(CN)_6]_3$ in an aqueous solution of 1 M KCl; and

Figure 11 is a cyclic voltammogram of a $Fe(III)_3[Co(III)(CN)_6]_2$ film in an aqueous solution of 1 M KCl.

When discussing Prussian blue and Prussian blue analogs it is convenient to start with Prussian blue itself since it has been well studied in the past. Prussian blue was first synthesised in Berlin in 1704 by Diesbach, a dye craftsman. Since then, because of its deep blue colour, Prussian blue has been widely used as a pigment for printing ink, paint etc. and has other colouring uses. Prussian blue has some interesting properties as well as being the

first metal complex to be synthesised.

Prussian blue is believed to include two types of compound, that is, soluble Prussian blue $M^{I}Fe(III)[Fe(II)(CN)_6]$ and insoluble Prussian blue $Fe(III)_4[Fe(II)(CN)_6]_3$ wherein $M^{I}$ represents a monovalent cation. One of the interesting properties of Prussian blue is that whichever type it is, Fe(II) and Fe(III), which are different in oxidation number, coexist in a common crystal. Prussian blue is thus a typical mixed valence complex compound. A second interesting property is that whichever type it is, Prussian blue is an insoluble salt having a solubility product Ksp = $10^{-40}$. A third interesting property of Prussian blue is that Everitt's salt which is a reduction product of Prussian blue which is represented by $M^{I}_2Fe(II)[Fe(II)(CN)_6]$ or $M^{I}_4Fe(II)_4-[Fe(II)(CN)_6]_3$ has the same lattice constant of 10.2 Angstrom as Prussian blue (see, for example, J. F. Keggin and F. D. Miles, Nature, 137, 577 (1936)). This means that the crystalline structure of Prussian blue is not changed by oxidation-reduction reactions.

These interesting properties of Prussian blue are also found in Prussian blue analogs. For example, a compound having Ru(II) substituted for Fe(II) bonded to the carbon atoms of the cyano groups of Prussian blue is also a mixed valence complex compound and is a purple pigment known as Ruthenium purple. Ruthenium purple has a lattice constant of 10.4 Angstrom (see, for example, J. F. Keggin and F. D. Miles, Nature, 137, 577 (1936)). It is also known that $[Cr(III)(CN)_6]^{3-}$ bonds with $Mn^{2+}$, $Fe^{2+}$, $Co^{2+}$, $Ni^{2+}$, $Cd^{2+}$, or a similar cation to form an insoluble or slightly soluble salt which is represented by $M^{II}_3[Cr(CN)_6]_2$, and which has the same salt structure as Prussian blue and a lattice constant *a* = 10.1 to 10.6 Angstrom. Similarly, $[M(III)(CN)_6]^{3-}$ where M = $Mn^{3+}$, $Co^{3+}$, $Rh^{3+}$ or $Ir^{3+}$ forms Prussian blue analogs (see, for example, B. M. Chadwick and A. G. Sharpe, Advan. Inorg. Chem, Radio Chem., 8, 83 (1966)). Generally, Prussian blue analogs may be represented

by the general formula:

$$M^A_K\left[M^B(CN)_6\right]_\ell \cdot xH_2O$$

wherein $M^A$: a metal ion having a valence of A,

$M^B$: a metal ion having a valence of B,

K : a positive number from 1 to 4,

$\ell$ : a positive number from 1 to 3,

x : a positive number including 0

with the proviso that A, B, K and $\ell$ satisfy the following equation:

$$A \times K = (6 - B) \times \ell$$

The foregoing description shows that Prussian blue and its analogs are insoluble or only slightly soluble salts having a common structure. The following description shows that Prussian blue and its analogs are electrochemically active compounds capable of undergoing a reversible oxidation-reduction reaction. Although Prussian blue and its analogs are mixed valence complex compounds having a metal ion as a redox centre, their electrochemical behaviour is not well known at present. This is because Prussian blue and its analogs have been traditionally available only in the form of colloidal particles. Prussian blue is conventionally prepared as follows:

(a) $Fe^{2+} + \left[Fe(III)(CN)_6\right]^{3-} \longrightarrow$ Prussian blue

(b) $Fe^{3+} + \left[Fe(II)(CN)_6\right]^{4-} \longrightarrow$ Prussian blue

(c) $Fe^{2+} + \left[Fe(II)(CN)_6\right]^{4-} \longrightarrow$ Everitt's salt $\xrightarrow{\text{oxidation}}$ Prussian blue

Prussian blue is obtained only in the form of colloidal particles since the chemical reaction takes place very rapidly. Up until now it was impossible to obtain Prussian blue in the form of a film which could be conveniently used as an electrode to examine the electrochemical behaviour of Prussian blue.

Prussian blue and its analogs can now be obtained in the form of a film on an electrode having a suitable shape to examine the electrochemical behaviour thereof by one of the following methods:

(1) Electrochemical method: Prussian blue or a Prussian blue analog is electrolytically produced in the form of a film on an electrically conductive substrate.

(2) Hybrid electrode method; A hybrid electrode is produced by binding Prussian blue or a Prussian blue analog with a matrix polymer together with an electrically conductive agent such as acetylene black.

Methods (1) and (2) are briefly explained hereinafter and the electrochemical behaviour of Prussian blue as a typical example is discussed.

First, method (1) is explained. This method is not only important in that a film of Prussian blue can be produced, but is also important in that method (1) can be used to evaluate whether method (2) is appropriate or not. Method (1) is based on the experimental finding that, unlike conventional methods (a), (b), (c) of synthesising Prussian blue, no deposit forms in a mixed solution containing $Fe^{3+}$ and $[Fe(CN)_6]^{3-}$. A solution containing $Fe^{3+}$ is added to a solution containing $[Fe(CN)_6]^{3-}$ to give a mixed solution, in which a platinum plate electrode of very small area which is to have a film of Prussian blue deposited thereon and a platinum plate electrode with a relatively large area to be used as a counter electrode are immersed. Galvanostatic electrolysis is then carried out for about 10 minutes by cathodically polarising the small platinum electrode at a current density of about 10 $\mu A/cm^2$. At the end of electrolysis, a film of Prussian blue had been deposited as a blue film on the small platinum electrode. In order to examine its electrochemical behaviour, the thus obtained film of Prussian blue is placed together with a counter electrode and a saturated calomel electrode in 1 M KCl to provide a three-electrode electrolytic cell. A cyclic voltammogram of the film of Prussian blue was produced by sweeping a triangular waveform potential thereon. The result is shown by curve a in Figure 1. When the

potential with respect to the saturated calomel electrode is +0.6 V, the film of Prussian blue is coloured. As the potential is swept from +0.6 V toward the cathode potential, a reduction current peak appears at about +0.2 V and the film changes to a film of Everitt's salt at -0.2 V. As the potential is swept from -0.2 V toward the anode potential, a current peak of oxidation from Everitt's salt to Prussian blue appears at about +0.2 V and the film electrode resumes the original coloured state at +0.6 V.

The above process may be expressed by the following electrochemical reaction scheme:

$$Fe(III)_4\left[Fe(II)(CN)_6\right]_3 + 4e^- + 4K^+ \longrightarrow K_4Fe(II)_4\left[Fe(II)(CN)_6\right]_3$$

Prussian blue Everitt's salt

As shown by curve a in Figure 1, a film electrode formed by the above-mentioned method (1) undergoes a reversible electrochemical reaction between Prussian blue and Everitt's salt.

Next, method (2) will be described. An aqueous solution containing $Fe^{2+}$ is mixed with an aqueous solution containing $\left[Fe(CN)_6\right]^{3-}$, giving Prussian blue in the form of a colloidal deposit. The Prussian blue deposit is then thoroughly dried in vacuo and micronised to a fine powder having a particle size of not larger than 1 μm by means of a mixer mill. In a solution of toluene and 1% by weight of a low-density polyethylene are dispersed 100 mg of the fine Prussian blue powder and 100 mg of acetylene black. The dispersion thus obtained was spread on a platinum plate electrode with a relatively small area using a spinner, and the toluene removed by evaporation in a dryer to leave a hybrid electrode consisting of Prussian blue, acetylene black, and low-density polyethylene. In order to examine the electrochemical properties of this hybrid electrode,cyclic voltammetry was carried out on the hybrid electrode in 1 M KCl by the same procedure as previously used for the voltammetric measurement of the Prussian blue film.

The result is shown by curve b in Figure 1.

As evident from the results of cyclic voltammetry applied on the films of Prussian blue prepared by methods (1) and (2), Prussian blue is not only useful as a pigment, but is also useful as an active cathodic material in a cell or battery since it is capable of an electrochemically reversible oxidation-reduction reaction. Prussian blue analogs may also be examined for their usefulness as active cathodic materials by a similar procedure.

The following examples are set forth to demonstrate that Prussian blue and Prussian blue analogs are useful as active cathodic materials in cells or secondary batteries.

Example 1

This example used Prussian blue as a typical example to show that Prussian blue and its analogs are stable against repeated oxidation-reduction cycles when used as an active cathodic material.

A solution containing 20 mM of $Fe^{3+}$ ion and a solution containing 20 mM of $[Fe(CN)_6]^{3-}$ ion were mixed in equal volumes to give a clear brown solution. A platinum plate electrode,with a relatively small area and a platinum plate electrode, with a relatively large area to be used as a counter electrode, were immersed in this clear brown solution. Galvanostatic electrolysis was carried out for about 10 minutes at a current density of 10 $\mu A/cm^2$ with the small platinum electrode as the cathode. At the end of electrolysis, a film of Prussian blue had been deposited on the small platinum electrode.

To examine the life of the thus obtained electrode when it undergoes repeated oxidation-reduction cycles, the electrode was repeatedly subjected to oxidation-reduction reaction in an aqueous solution of 1 M KCl. The oxidation-reduction cycle was repeated over a potential range between +0.6 V and -0.2 V relative to a saturated calomel electrode using rectangular pulses at 1 Hz. The results are shown in Figure 2. Curve c in Figure 2 is the cyclic voltammogram of the electrode with the film of Prussion blue thereon

for the first cycle of the oxidation-reduction reaction, and curve d is the cyclic voltammogram of the same electrode after $10^4$ cycles of the oxidation-reduction reaction. Curves e and f in Figure 2 show the quantities of electricity required for oxidation-reduction reaction by the electrode in the first cycle and after $10^4$ cycles, respectively. It will be appreciated from these curves that Prussian blue is an active cathodic active material which is highly stable undergoing repeated oxidation-reduction reactions, that is, repeated charging/discharging cycles.

Example 2

This example used Prussian blue to determine a proper cation moving into and out of the crystal lattice for electric charge compensation when undergoing oxidation-reduction reactions, that is, for selecting a proper cation of an electrolyte.

An electrode with a film of Prussian blue thereon was formed by the same procedure as described in Example 1. The cycle life of the electrode was evaluated against repeated oxidation-reduction reactions in aqueous electrolytes containing various cations. The cycle life was evaluated in terms of the retention of the active film defined below:

$$\text{Retention of the active film} = \frac{\text{Quantity of electricity of the film having passed a given number of cycles}}{\text{Quantity of electricity of the initial film}} \times 100\%$$

The results are shown in Figure 3. As seen from Figure 3, $K^+$, $Rb^+$, $Cs^+$, and $NH_4^+$ cations can stably move into and out of the crystal structure of Prussian blue whereas $Li^+$, $Na^+$, and $Ba^{2+}$ cations cannot.

It will thus be understood that the type of cation which can move into and out of the crystal structure of Prussian blue is limited. The crystal structure of Prussian blue is shown in Figure 4.

As already mentioned, Prussian blue is a mixed valence complex compound containing iron ions having different oxidation numbers, that is, Fe(II) and Fe(III) in a common crystal structure. As seen from Figure 4, the carbon atom of a cyano group coordinates with Fe(II) and the nitrogen atom of the cyano group coordinates with Fe(III) so that Fe(II) and Fe(III) are linked through the cyano group, forming a three dimensional network in the crystal structure. In conjunction with the oxidation and reduction of Prussian blue, cations move into and out of this crystal structure. The limitation of the type of intercalating cation will become apparent by taking into account the size of the bottle-neck in the Prussian blue crystal shown in Figure 5.

Circles in Figure 5 diagramatically show Fe(II) and Fe(III) ions and carbon and nitrogen atoms on the basis of their ionic radius. In Figure 5, the central circle shown as having a diameter of 3.5 Å represents the bottle-neck which is believed to limit the type of cation capable of moving into and out of the crystal structure.

To compare the size of the bottle-neck with the size of cations, the crystallographic radius of an ion which is believed to be the size of a bare ion, and the Stokes' ionic radius which is believed to be one of the measures of the radius of an aqueous ion are shown for several cations in the following Table.

TABLE

| Ion | Crystallographic Radius (Å) | Stokes' ionic radius (Å) |
|---|---|---|
| $H^+$ | 1.14 | - |
| $Li^+$ | 0.60 | 2.37 |
| $Na^+$ | 0.95 | 1.87 |
| $K^+$ | 1.33 | 1.25 |
| $Rb^+$ | 1.48 | 1.18 |
| $Cs^+$ | 1.69 | 1.19 |
| $NH_4^+$ | 1.48 | 1.25 |
| $Ba^{2+}$ | 1.35 | 2.88 |

It will be understood from this Table that those cations having a Stokes' ionic radius smaller than the bottle-neck radius of 1.8 Å can stably move into and out of the crystal structure of Prussian blue.

Although only cations in an aqueous solution have been referred to above, it is thought that, from the above explanation, the same will be true for cations in non-aqueous electrolytes.

Example 3

This example used Prussian blue to demonstrate the optimum pH range of an electrolyte required when Prussian blue and its analogs were used as active cathodic material of a cell or battery.

Electrodes with films of Prussian blue thereon were prepared by the same procedure as in Example 1 and aqueous solutions of 1 M KCl having varying pH values were used. The electrodes were examined for stability by subjecting some of them to the same cycle life test as in Example 2 and by immersing the remaining electrodes in the KCl solutions for the same time as required for the cycle life test. The number of cycles was $10^4$.

Figure 6 shows that the stable pH range is different between the results of the cycle life test (depicted by open circles) and the results of the immersion test (depicted by filled-in circles). In either case, the film is dissolved and the stability is poor in an electrolyte with a pH higher than 5. On the other hand, in an electrolyte with a pH lower than pH 3, the film is stable in the immersion test, but is unstable in the cycle life test accompanied by oxidation-reduction reaction as hydrogen ions intercalate the film.

As understood from the above results, it is important to adjust the pH of an electrolyte when Prussian blue and its analogs are used as active cathodic materials of cells or batteries. The stable pH range is between 3 and 5.

Example 4

In this example, a Prussian blue film was used as active cathodic

material in a cell taking into account the results of Examples 1 to 3.

100 mg of Prussian blue and 100 mg of acetylene black were kneaded with about 100 mg of a solution of 1% by weight of a low-density polyethylene in toluene, and moulded to form a pellet. The toluene was removed by evaporation in a dryer so that the resulting pellet was ready for use as a cathode 6. Zinc power having an amalgamated surface was used as an anode 2, an aqueous solution of 1 M $NH_4Cl$ adjusted to pH 4.0 was used as an electrolyte 4, and a cellophane sheet was used as a separator 5 to form a button-type secondary battery or cell as shown in Figure 7. The secondary battery or cell also had a cathode can 1 and an anode can 7 which was maintained spaced apart by an insulating space 3.

The cell had an open circuit voltage of about 1.6 volts and exhibited a constant current charge/discharge characteristic as shown in Figure 8 when current was passed at 1 $mA/cm^2$.

The battery retained a charging efficiency of 90% or higher after the constant current charge/discharge cycle was repeated 500 times. It has been found that Prussian blue and its analogs are improved active cathodic materials.

Example 5

This example illustrates a secondary battery or cell using a non-aqueous electrolyte and metallic lithium as the anode.

Using Prussian blue as an active cathodic material, a cathode pellet was formed by the same procedure as in Example 4. A disc was punched from a lithium ribbon to form the anode, a propylene carbonate solution containing two solutes, 0.1 M of $LiClO_4$ and 0.5 M of $NH_4ClO_4$ was used as the electrolyte. A non-woven fabric of polypropylene was used as the separator to form a button-type battery of substantially the same configuration as shown in Figure 7. The battery had an open circuit voltage of about 3.5 volts and retained a charging efficiency of about 95% after a constant current

charge/discharge cycle that was repeated 100 times at 0.1 $mA/cm^2$.

Example 6

This example illustrates a battery or cell which has an anode of lithium, an active cathodic material of Prussian blue formed by an electrochemical method, and a solid polymer electrolyte. The battery or cell is shown in cross-section in Figure 9.

The anode used was a stainless steel foil 8 having a lithium foil 9 pressure bonded thereto and a cathode 11 of Prussian blue which was electrolytically deposited to a thickness of about 10μm on a current collector in the form of a stainless steel foil 12. The electrolyte used was a polyethylene oxide-$KClO_4$ solid electrolyte 10. The solid electrolyte was formed on the film of Prussian blue as follows. Polyethylene oxide and $KClO_4$ were dissolved in methanol so that the ratio of the $K^+$ ion of $KClO_4$ to the oxygen atom of polyethylene oxide was 1:1. The solution was spread on the film of Prussian blue by spin coating, and the methanol solvent was evporated to obtain a solid electrolyte layer. The lithium anode was then pressure bonded to the electrolyte layer to complete the battery. The battery was sealed with an epoxy resin 13 to shield the battery from the atmosphere.

The battery had an open circuit voltage of about 3.5 volts and a life of not less than 100 cycles of constant current charge/discharge at 10 $\mu A/cm^2$.

Example 7

This example illustrates that among Prussian blue analogs, the compound having Ru(II) substituted for Fe(II) of Prussian blue $Fe(III)_4[Fe(II)(CN)_6]_3$, that is, Ruthenium purple is effective as active cathodic material.

The Ruthenium purple was synthesised as follows. An aqueous solution containing Fe(III) and an aqueous solution containing $[Ru(CN)_6]^{4-}$ were mixed in equimolar amounts, obtaining Ruthenium purple in the form of a colloidal deposit. The Ruthenium purple

deposit was dried in vacuo and then processed to form a hybrid electrode by method (2) referred to above. To examine whether the resulting electrode carries out reversible oxidation-reduction reaction in a stable manner, a cyclic voltammogram of the electrode was produced using an electrolyte of 1 M KCl.

The result is shown in Figure 10, which shows the same reversible oxidation-reduction reaction as in the case of Prussian blue shown in Figure 1 takes place.

Example 8

This example illustrates another Prussian blue analog, namely $Fe(II)_3[Cr(III)(CN)_6]_2$.

This compound was obtained by mixing an aqueous solution containing Fe(II) with an aqueous solution containing $[Cr(III)(CN)_6]^{3-}$ as in Example 7. A hybrid electrode was prepared as in Example 7. From a cyclic voltammogram, it was found that the electrode underwent stable oxidation-reduction reactions.

Example 9

By repeating the same procedure as in Examples 7 and 8, it was found that $Cu(II)_2[Mn(II)(CN)_6]$, a Prussian blue analog, underwent stable oxidation-reduction reactions.

Example 10

This example illustrates $Fe(II)_3[Co(III)(CN)_6]_2$, a Prussian blue analog.

This compound was obtained by mixing an aqueous solution containing Fe(II) with an aqueous solution containing $[Co(III)(CN)_6]^{3-}$ as in Example 7. A hybrid electrode was prepared as in Example 7.

Figure 11 is a cyclic voltammogram of this electrode. As will be seen this compound undergoes stable cycles of oxidation and reduction and is suitable as active cathodic material.

Example 11

This example illustrates $Cr(III)[Cr(III)(CN)_6]$, another Prussian blue analog.

The compound was obtained in the form of a black powder by mixing an aqueous solution containing Cr(III) ions with an aqueous solution containing $[Cr(III)(CN)_6]^{3-}$ ions as in Example 7. A hybrid electrode was prepared as in Example 7. From a cyclic voltammogram of this electrode in an electrolyte of 1 M KCl, it was found that the electrode underwent stable oxidation-reduction reactions.

Example 12

This example illustrates $Ag(I)_3[Fe(III)(CN)_6]$, a further Prussian blue analog.

The compound was obtained in the form of an orange powder by mixing an aqueous solution containing Ag(I) ions with an aqueous solution containing $[Fe(III)(CN)_6]^{3-}$ ions as in Example 7. A hybrid electrode was prepared as in Example 7.

A cyclic voltammogram of this electrode in an aqueous solution of 1 M KCl, shows that the electrode underwent stable oxidation-reduction reactions. It was also found that the electrode changed its colour between orange and white with the oxidation-reduction reaction.

Example 13

This example illustrates $Ag(I)_4[Fe(II)(CN)_6]$ which also is a Prussian blue analog.

This compound was obtained in the form of a white powder by mixing an aqueous solution containing Ag(I) ions with an aqueous solution containing $[Fe(II)(CN)_6]^{4-}$ ions as in Example 7.

A hybrid electrode was prepared as in Example 7, and a cyclic voltammogram produced. It was found that the electrode underwent stable oxidation-reduction cycles and changed its colour between orange and white with the oxidation-reduction reaction. The peak current during oxidation-reduction reaction was positioned in close proximity to the peak appearing in Example 12, indicating a close relationship between the compounds of Examples 12 and 13.

Example 14

This example illustrates $Ag(I)_3[Mn(III)(CN)_6]$, a further Prussian blue analog.

The compound was obtained in the form of a brown powder by mixing an aqueous solution containing Ag(I) ions with an aqueous solution containing $[Mn(III)(CN)_6]^{3-}$ ions as in Example 7. A hybrid electrode was prepared as in Example 7. It was found that the electrode repeated stable oxidation-reduction cycles in an electrolyte of 1 M KCl.

Example 15

A further Prussian blue analog was obtained in the form of a white powder ($Sn(IV)[Fe(II)(CN)_6]$) by mixing a solution containing Sn(IV) ions with a solution containing $[Fe(II)(CN)_6]^{4-}$ ions. A cyclic voltammogram of this compound was produced using the same procedure as in Example 7, and it was found that the compound underwent stable oxidation-reduction cycles.

As demonstrated by Examples 1 to 15, Prussian blue and Prussian blue analog are useful as active cathodic materials for secondary batteries. This is because they satisfy all the requirements for active cathodic materials, that is, solubility, electrochemically reversible oxidation-reduction reaction, no change of crystal structure during oxidation-reduction reaction etc.

It is impossible to refer to all Prussian blue analogs in Examples 1 to 15. Since examples are described for typical transition metals, it will be appreciated how to produce other Prussian blue analogs.

CLAIMS

1. A cell comprising an anode, a cathode, and an electrolyte in contact with both the anode and the cathode, characterised in that said cathode contains as an electrochemically active material a polynuclear transition metal cyanide complex having the general formula:

$$M_K^A\left[M^B(CN)_6\right]_\ell \cdot xH_2O$$

where $M^A$: a metal ion having a valence of A,

$M^B$: a metal ion having a valence of B,

K : a positive number from 1 to 4,

$\ell$ : a positive number from 1 to 3,

x : a positive number including 0,

with the proviso that A, B, K, and $\ell$ satisfy the following equation:

$A \times K = (6 - B) \times \ell$

2. A cell as claimed in claim 1, characterised in that the electrochemically active material has the following formula:

$$M_4^A\left[M^B(CN)_6\right]_3 \cdot xH_2O$$

where $M^A$: Fe(III), Ru(III), Os(III), Al(III), Sb(III), Bi(III), Ce(III);

$M^B$: Fe(II), Ru(II), Os(II).

3. A cell as claimed in claim 1 characterised in that the electrochemically active material has the following formula:

$$M_3^A\left[M^B(CN)_6\right]_2 \cdot xH_2O$$

where $M^A$: Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II);

$M^B$: Cr(III), Mn(III), Fe(III), Co(III), Rh(III), Ir(III).

4. A cell as claimed in claim 1 characterised in that the electrochemically active material has the following formula:

$$M^A_2\left[M^B(CN)_6\right].xH_2O$$

where $M^A$: Cr(II), Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II);

$M^B$: Cr(II), Mn(II), Fe(II), Ru(II), Os(II), Co(II), Rh(II), Ir(II).

5. A cell as claimed in claim 1 characterised in that the electrochemically active material has the following formula:

$$M^A\left[M^B(CN)_6\right].xH_2O$$

where $M^A$: Cr(III), Fe(III), Ru(III), Os(III), Al(III), Sb(III), Bi(III), Ce(III);

$M^B$: Cr(III), Mn(III), Fe(III), Ru(III), Os(III).

6. A cell as claimed in claim 1 characterised in that the electrochemically active material has the following formula:

$$M^A_3\left[M^B(CN)_6\right].xH_2O$$

where $M^A$: Cu(I), Ag(I), Hg(I), Tl(I);

$M^B$: Cr(III), Mn(III), Fe(III), Ru(III), Os(III), Co(III), Rh(III), Ir(III).

7. A cell as claimed in claim 1 characterised in that the electrochemically active material has the following formula:

$$M^A_4\left[M^B(CN)_6\right].xH_2O$$

where $M^A$: Cu(I), Ag(I), Hg(I), Tl(I);

$M^B$: Cr(II), Mn(II), Fe(II), Ru(II), Os(II), Co(II), Rh(II), Ir(II).

8. A battery as claimed in claim 1 characterised in that the electrochemically active material has the following formula:

$$M^A\left[M^B(CN)_6\right].xH_2O$$

where $M^A$: Sn(IV), Ce(IV);

$M^B$: Cr(II), Mn(II), Fe(II), Ru(II), Os(II), Co(II), Rh(II), Ir(II).

FIG. 1

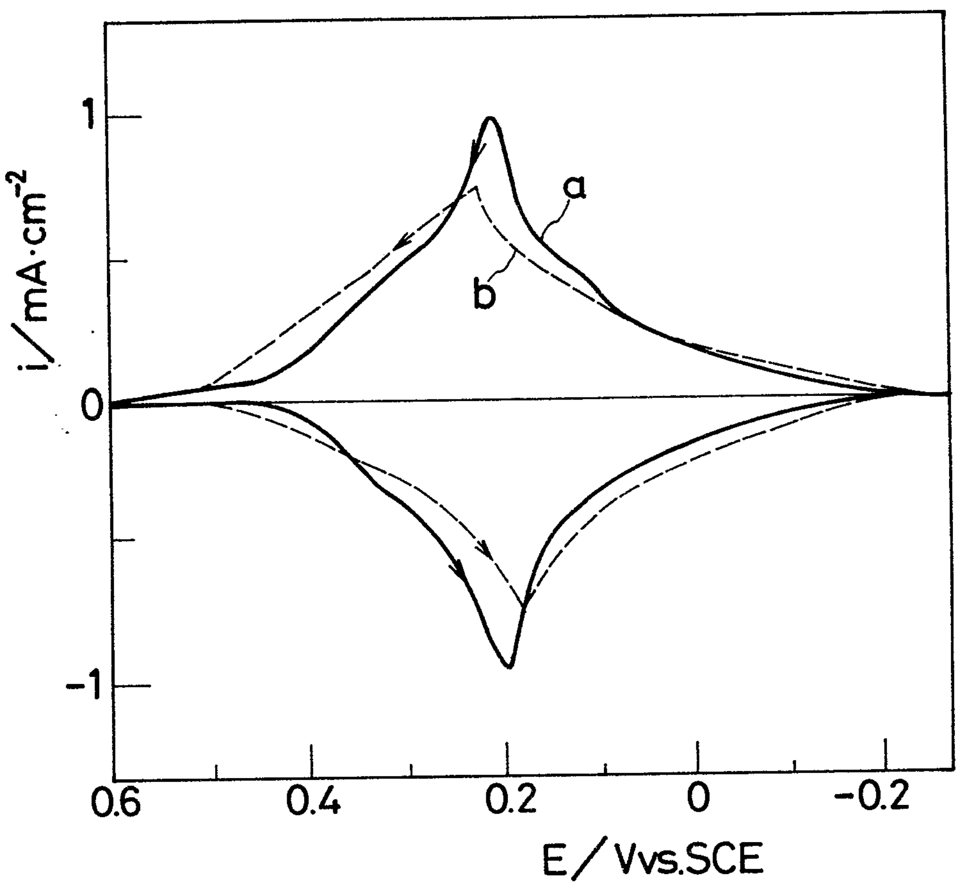

FIG. 2

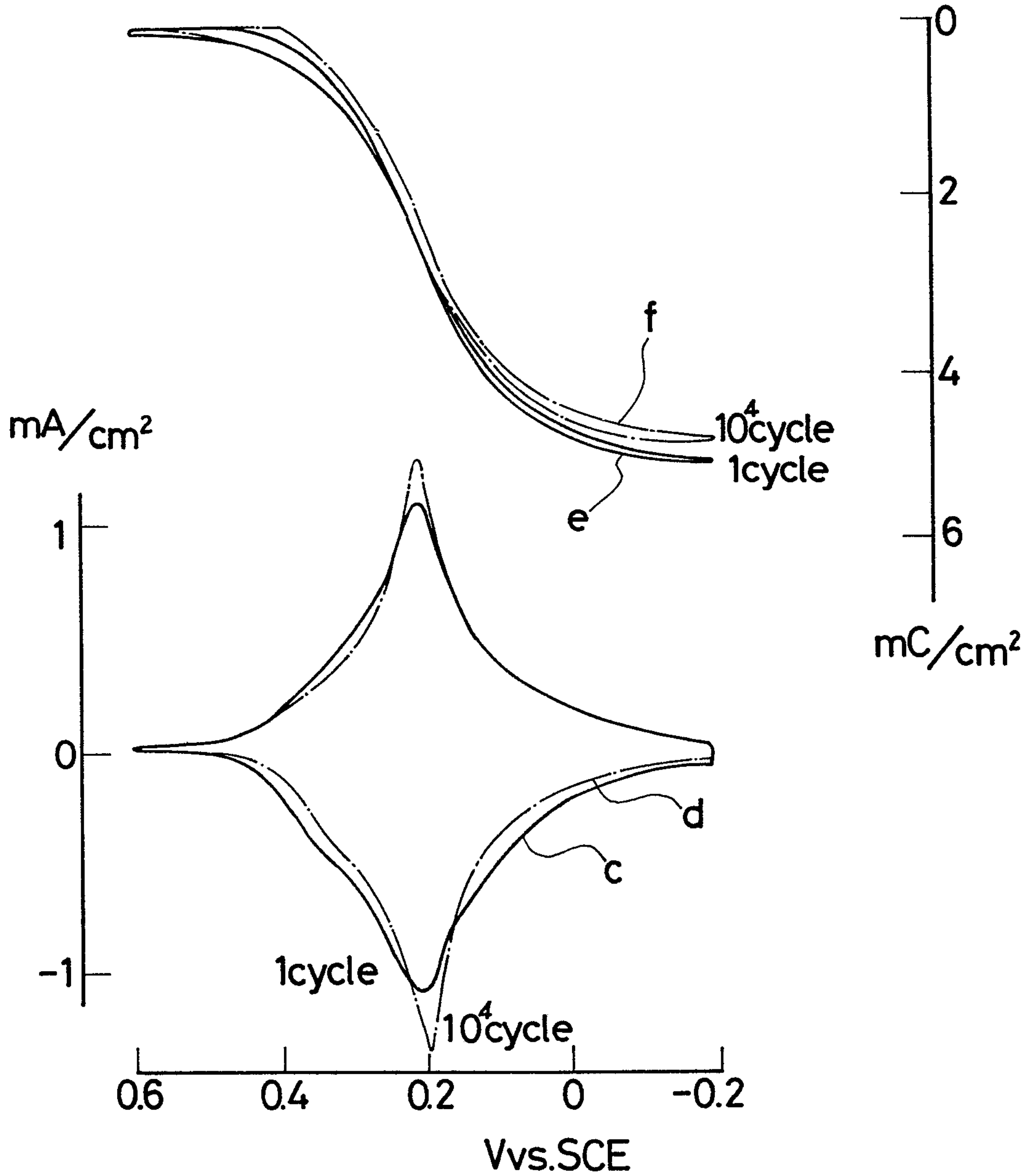
0
2
4
6
mC/cm²
f
$10^4$cycle
1cycle
e
mA/cm²
1
0
-1
d
c
1cycle
$10^4$cycle
0.6
0.4
0.2
0
-0.2
Vvs.SCE

0086555

3/6

FIG. 3

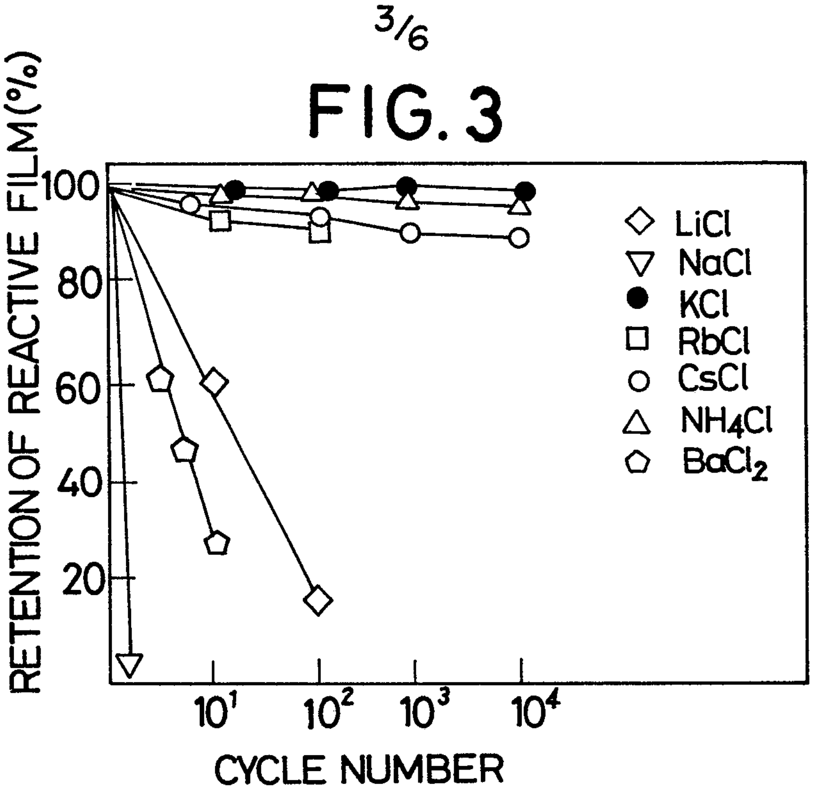


FIG. 4

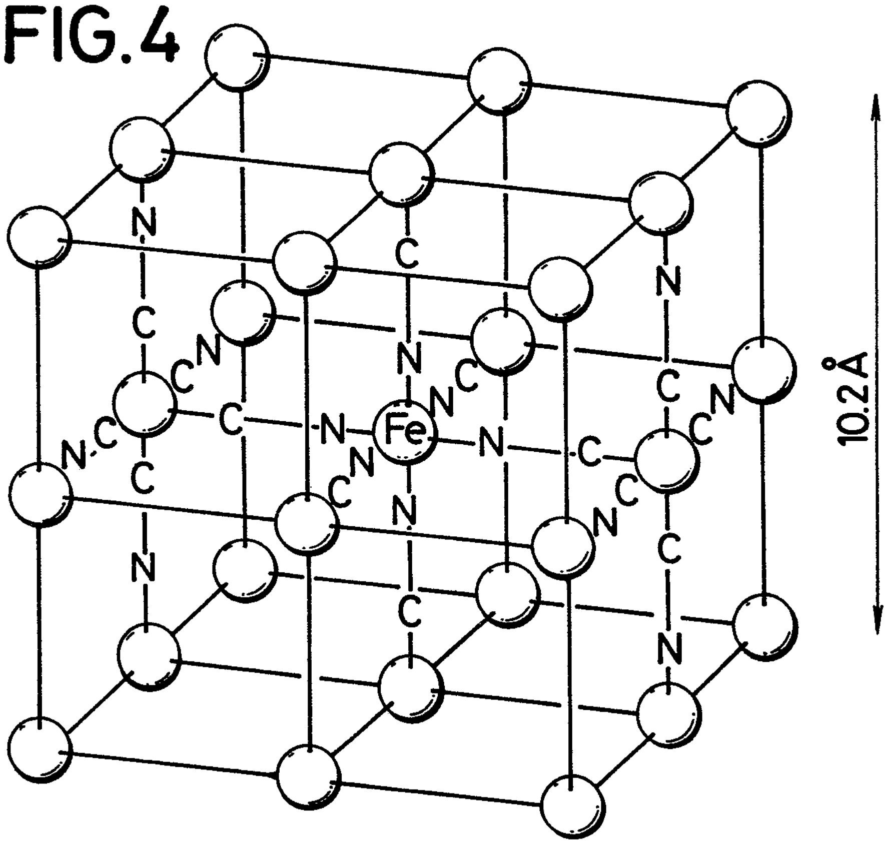

FIG.5

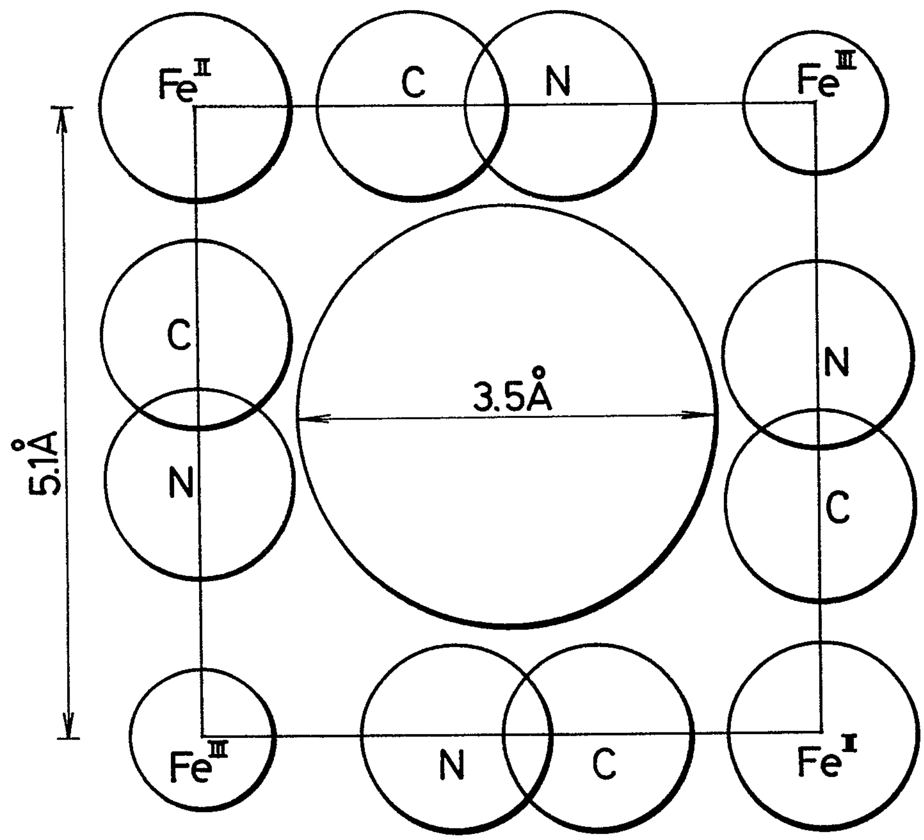
Fe^II
C
N
Fe^III
C
3.5Å
N
5.1Å
N
C
Fe^III
N
C
Fe^II

FIG.6

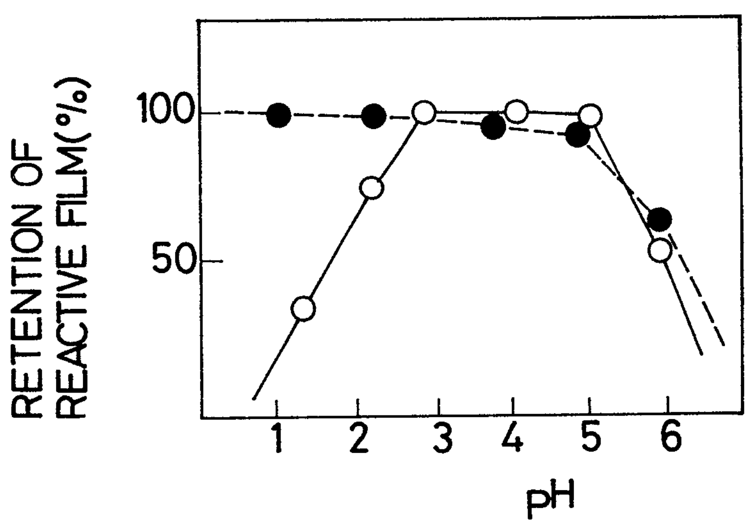
RETENTION OF REACTIVE FILM(%)
100
50
1
2
3
4
5
6
pH

FIG. 7

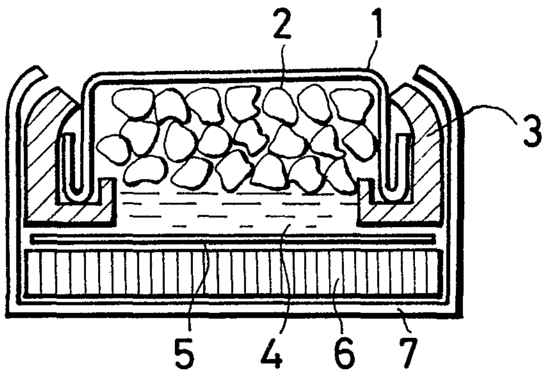


FIG. 8

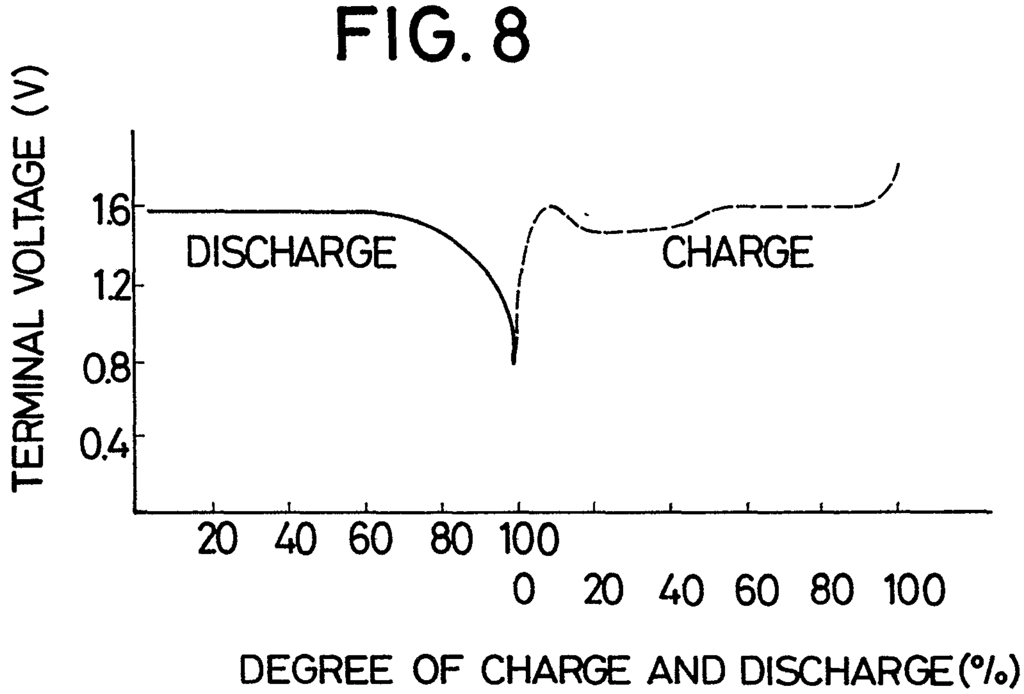


FIG. 9

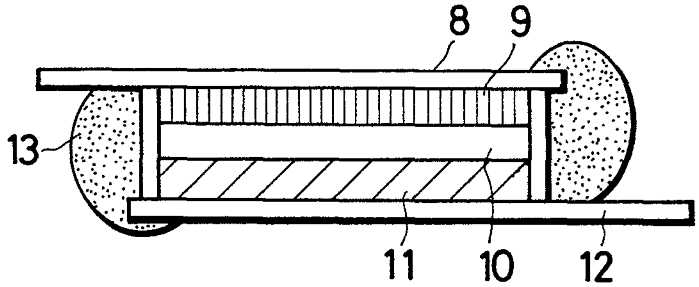

FIG. 10

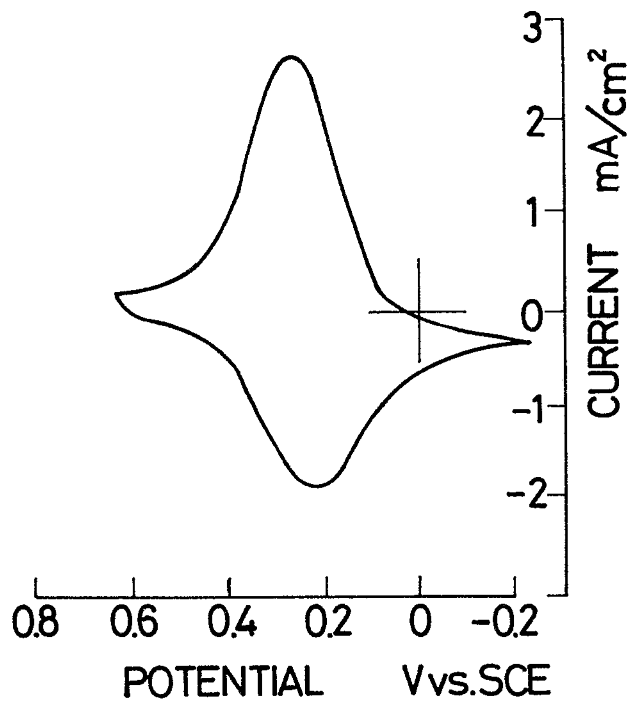
3
2
1
0
-1
-2
CURRENT mA/cm²
0.8
0.6
0.4
0.2
0
-0.2
POTENTIAL Vvs.SCE

FIG. 11

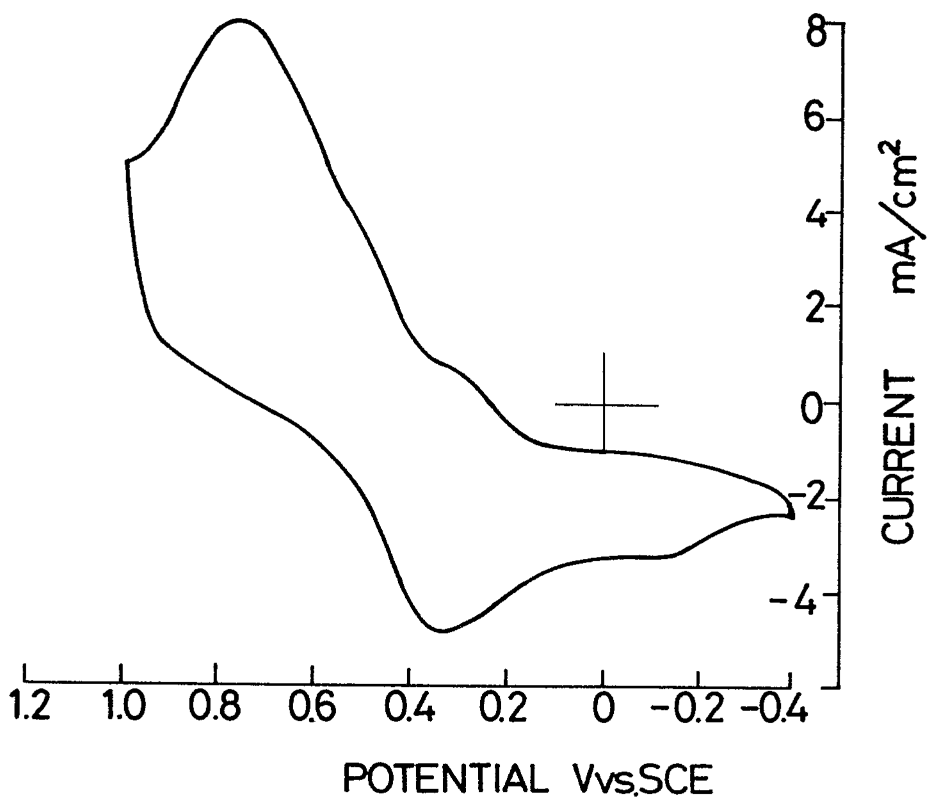
8
6
4
2
0
-2
-4
CURRENT mA/cm²
1.2
1.0
0.8
0.6
0.4
0.2
0
-0.2
-0.4
POTENTIAL Vvs.SCE

0086555

European Patent Office

# EUROPEAN SEARCH REPORT

Application number

EP 83 30 0176

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 012 943 (SAFT-LECLANCHE) *Abstract; page 2, lines 12-34; page 3, lines 1-2, lines 26-36; page 5, example 2; page 7* | 1,2 | H 01 M 4/58<br>C 01 C 3/12 |
| | --- | | |
| X | FR-A- 650 923 (A.HELBRONNER) *Page 1, lines 1-30* | 1,3 | |
| | --- | | |
| X | FR-A-2 324 127 (S.A.F.T) *Page 1, lines 19-40; page 2, lines 1-30* | 1,6,7 | |
| | --- | | |
| A | GB-A-2 010 574 (LOCKHEED MISSILES) | | |
| | --- | | **TECHNICAL FIELDS SEARCHED (Int. Cl. 3)** |
| A | CHEMICAL ABSTRACTS, vol. 94, no. 12, March 1981, page 763, no. 95071b, Columbus Ohio (USA); H.SIEBERT et al.: "Rhombohedrally crystallizing zinc hexacyanometalates (III) Zn3[M(CN)6]2". & Z. NATURFORSCH., B: ANORG. CHEM., ORG. CHEM. 1981, 36B(1), 123-4. *Abstract* | | H 01 M 4/58<br>H 01 M 4/36<br>C 01 C 3/12<br>C 01 C 3/11 |
| | --- -/- | | |

The present search report has been drawn up for all claims

| Place of search | Date of completion of the search | Examiner |
|---|---|---|
| THE HAGUE | 29-04-1983 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0086555

European Patent Office

# EUROPEAN SEARCH REPORT

Application number

EP 83 30 0176

Page 2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | CHEMICAL ABSTRACTS, vol. 95, no. 16, October 1981, page 743, no. 143350m, Columbus Ohio (USA); V.S.DUBROVIN et al.: "Synthesis and properties of normal cobalt(II) ferrocyanide". & ZH. NEORG. KHIM. 1981, 26(8), 2149-52. *Abstract* ----- | | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 29-04-1983 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82